(19) Europäisches Patentamt
European Patent Office
Office européen des brevets

(11) **EP 4 072 893 B1**

(12) **FASCICULE DE BREVET EUROPEEN**

(45) Date de publication et mention
de la délivrance du brevet:
**19.06.2024  Bulletin 2024/25**

(21) Numéro de dépôt: **20861962.7**

(22) Date de dépôt: **12.11.2020**

(51) Classification Internationale des Brevets (IPC):
*B60L 3/00* (2019.01)     *B60L 3/12* (2006.01)
*B60L 58/14* (2019.01)    *B60L 58/15* (2019.01)
*B60L 58/20* (2019.01)    *B60R 16/03* (2006.01)
*H01M 10/42* (2006.01)    *H02J 7/00* (2006.01)
*H02J 7/14* (2006.01)

(52) Classification Coopérative des Brevets (CPC):
**B60L 3/0046; B60L 3/12; B60L 58/14; B60L 58/15;
B60L 58/20; B60R 16/03; H01M 10/42;
H01M 10/48; H01M 10/486; H02J 7/007;
H02J 7/00712; H02J 7/00714; H02J 7/007182;
H02J 7/007194; H02J 7/1492;**         (Cont.)

(86) Numéro de dépôt international:
**PCT/FR2020/052070**

(87) Numéro de publication internationale:
**WO 2021/116548 (17.06.2021 Gazette 2021/24)**

(54) **PROCEDE DE CONTROLE DYNAMIQUE DU COURANT DE CHARGE D'UN STOCKEUR D'ENERGIE ELECTRIQUE DE VEHICULES AUTOMOBILES**

VERFAHREN ZUM DYNAMISCHEN ÜBERWACHEN DES LADESTROMES EINES ELEKTROENERGIESPEICHERS FÜR KRAFTFAHRZEUGE

METHOD OF DYNAMIC CONTROL OF THE CHARGING CURRENT OF AN ELECTRIC ENERGY STORAGE OF A VEHICLE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité:  **12.12.2019  FR 1914275**

(43) Date de publication de la demande:
**19.10.2022  Bulletin 2022/42**

(73) Titulaire: **Stellantis Auto SAS
78300 Poissy (FR)**

(72) Inventeurs:
• **BOTCHON, Yannick
92160 ANTONY (FR)**
• **MORNET, Mickael
78330 FONTENAY LE FLEURY (FR)**

(56) Documents cités:
**US-A1- 2008 042 615     US-A1- 2016 193 940
US-A1- 2018 134 168**

EP 4 072 893 B1

(52) Classification Coopérative des Brevets (CPC):
(Cont.)
B60L 2240/547; B60L 2240/549; H01M 2220/20;
Y02E 60/10; Y02T 10/70; Y02T 10/92

**Description**

L'invention s'applique au domaine de la gestion de l'énergie électrique dans les véhicules automobiles.

Plus précisément, l'invention concerne un procédé de contrôle dynamique du courant de charge d'un dispositif de stockage d'énergie électrique ou stockeur de véhicules automobiles à motorisation thermique, hybride ou électrique.

Dans les véhicules automobiles, les moyens destinés à la fourniture d'énergie électrique aux divers équipements comprennent des dispositifs de stockage ou « stockeurs » d'énergie électrique et notamment des batteries 12V qui ont un rôle essentiel.

Pour assurer, à la fois, l'équilibre permanent entre les alimentations électriques de tous les équipements du réseau de bord du véhicule fonctionnant sous une tension de 12V, la production d'énergie électrique et la charge du stockeur, il est nécessaire de réguler en permanence le courant circulant dans le ou les stockeurs du véhicule, pour le(s) recharger si nécessaire. Cette mesure d'adaptation est particulièrement importante pour les batteries de type Lithium-ion, dont les courants de charge appelés peuvent être particulièrement élevés s'ils ne sont pas maîtrisés.

Dans ce contexte, il s'avère donc essentiel de contrôler le courant de charge pouvant circuler dans le stockeur en fonction des capacités des systèmes embarqués assurant la fourniture d'énergie électrique.

Il existe déjà des procédés assurant la gestion des courants de charge des batteries lithium de véhicules automobiles.

Ainsi, le brevet US10442373 décrit un procédé de gestion de la batterie au lithium d'un véhicule destiné à éviter la surcharge ou la décharge de cette batterie pour la protéger en toute sécurité et dans diverses conditions, notamment, lorsqu'elle est utilisée comme batterie à basse tension dans le véhicule. Ce procédé est mis en oeuvre au moyen d'un système comprenant un relais qui connecte et déconnecte électriquement divers équipements alimentés par la batterie et un commutateur qui détermine un état de connexion en fonction de la manipulation de l'utilisateur et génère un signal d'activation et de désactivation du relais en fonction de l'état de connexion. Ce système comprend, en outre, un contrôleur qui active et désactive le relais en fonction de l'état de connexion du commutateur de reconnexion.

On connaît encore des documents US2018134168A1 et 2016193940A1 des procédés de charge de batterie correspondant au préambule de la revendication 1.

Cependant, les procédés connus ne permettent pas de piloter dynamiquement le courant de charge pouvant circuler dans la batterie en fonction des capacités de production d'énergie électrique des générateurs embarqués dans le véhicule.

Dans ce contexte, l'invention vise à apporter une solution technique permettant d'adapter en continu le courant de charge circulant dans un stockeur et, plus particulièrement, dans une batterie Lithium-ion en fonction de la quantité de courant disponible et/ou pouvant être produite par les générateurs électriques du véhicule.

Cette solution doit, en outre, maintenir un équilibre entre la quantité d'énergie électrique pouvant, d'une part, être produite et celle devant, d'autre part, être fournie au stockeur et à l'ensemble des équipements électriques du réseau de bord.

Ce but est atteint au moyen d'un procédé de contrôle dynamique du courant d'un stockeur d'énergie électrique à basse tension de véhicule automobile équipé d'au moins un générateur d'énergie électrique pour fournir l'énergie de charge de ce stockeur ce contrôle dynamique étant basé sur la tension maximale autorisée et comprenant une première opération d'estimation de la tension à vide et de la résistance du stockeur effectuée à partir des mesures de la température, du courant et de la tension du stockeur, caractérisé en ce qu'il comprend une seconde opération de mesure de la réserve de courant de charge disponible pour la recharge du stockeur, c'est-à-dire la quantité de courant que le générateur est en capacité de mettre à disposition du stockeur, en fonction de la capacité de production d'énergie du générateur, une troisième opération de détermination du courant de charge maximal autorisé pour ledit stockeur à partir de l'état de charge du stockeur, du courant, de la température du stockeur et de la réserve de courant disponible et une quatrième opération de détermination de la tension maximale autorisée pour ledit stockeur à partir de la tension à vide du stockeur, de sa résistance estimée et du courant maximal autorisé.

Selon une première variante de mise en oeuvre du procédé, ces mesures sont fournies par un boîtier de surveillance de l'état du stockeur.

Selon une autre variante de mise en oeuvre du procédé, ces mesures sont obtenues au moyen d'une cartographie de la résistance interne du stockeur construite en fonction de sa température.

Selon une autre caractéristique, la seconde opération est effectuée à partir du rapport cyclique d'ouverture du générateur et de sa température.

De préférence, la réserve de courant est déterminée en calculant le différentiel entre, d'une part, le rapport cyclique d'ouverture du générateur en temps réel et, d'autre part, son taux de charge limite.

Selon une variante de mise en oeuvre du procédé, on détermine au préalable le courant limite du stockeur en fonction de sa température et de son état de charge puis on compare la somme du courant et de la réserve de courant disponible avec ce courant limite de telle sorte que si la somme du courant et de la réserve est inférieure ou égal au courant limite alors le courant de charge maximal autorisé est égal à cette somme tandis que si cette somme est supérieure au courant limite alors le courant de charge maximal autorisé est égal au courant limite.

Selon encore d'autres caractéristiques, la quatrième opération est effectuée à partir de la tension à vide du stockeur, de sa résistance estimée et du courant maximal autorisé de telle sorte que la tension maximale autorisée est obtenue en ajoutant à la tension à vide du stockeur le produit de sa résistance interne par son courant maximal autorisé.

Un autre objet de l'invention est un véhicule automobile équipé d'un calculateur embarqué et de logiciels aptes et destiné à la mise en oeuvre du procédé de contrôle dynamique du courant d'un stockeur 12V tel que défini ci-dessus.

Le procédé de l'invention s'applique de façon très générale tant au contrôle du courant de charge de batteries traditionnelles au plomb que de batteries Lithium-ion équipant des véhicules automobiles à motorisation thermique, hybride ou électrique.

L'invention apporte, en particulier, une solution à la problématique soulevée par le prochain abandon des batteries au plomb sur les véhicules Européens.

Le procédé de l'invention permet de maîtriser le dimensionnement et le coût des générateurs d'énergie électrique embarqués qui peut être impacté par le passage à la technologie Lithium-ion et offre un système de gestion énergétique 12V du véhicule, compatible avec cette nouvelle technologie.

D'autres caractéristiques et avantages de l'invention ressortiront à la lecture de la description qui va suivre, en référence aux figures annexées et détaillées ci-après.

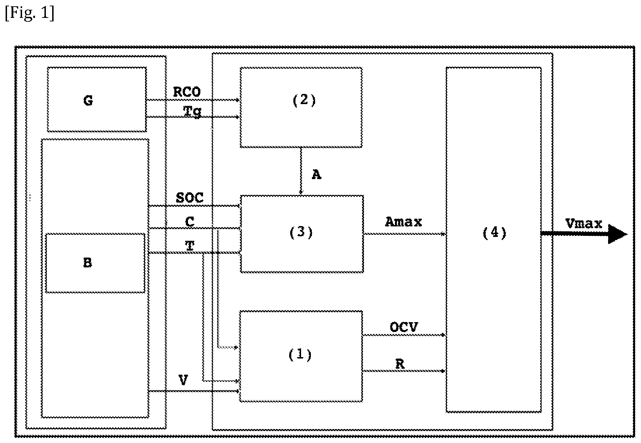

[Fig. 1] est schéma illustrant un mode opératoire préférentiel du procédé de contrôle dynamique du courant de charge d'un stockeur d'énergie électrique selon l'invention.

Pour plus de clarté, les éléments identiques ou similaires sont repérés par des signes de référence identiques dans la description et sur la figure.

Naturellement, les modes de mise en oeuvre du procédé de l'invention illustrés par la figure présentée ci-dessus et décrits ci-après, ne sont donnés qu'à titre d'exemples non limitatifs. Il est explicitement prévu que l'on puisse proposer et combiner entre eux différents modes pour en proposer d'autres.

L'invention concerne le domaine de la gestion de l'énergie électrique utilisée dans les véhicules automobiles équipés de stockeurs électriques à basse tension, tels que des batteries 12V, et dont la motorisation est thermique, ou hybride ou bien encore électrique.

Plus précisément, l'invention concerne un procédé d'adaptation dynamique du courant d'un stockeur électrique à basse tension (référencé B par la suite) et, plus particulièrement d'une batterie 12V Lithium-ion, dans un système comprenant au moins un générateur d'énergie électrique (référencé G par la suite) tel qu'un convertisseur de tension DC/DC équipant les véhicules hybrides ou électriques ou un alternateur de véhicule à moteur à combustion, destiné à fournir de l'énergie électrique pour la charge de ce stockeur électrique.

Le procédé de l'invention est destiné à contrôler et à ajuster la tension à appliquer aux bornes du stockeur 12V pour adapter en permanence le courant de charge circulant dans le stockeur en fonction, à la fois, de la réserve de courant disponible et de la quantité de courant pouvant être produit par le générateur électrique du véhicule.

Ce procédé est mis en oeuvre de façon continue sans entraîner de rupture de l'équilibre entre la quantité d'énergie électrique susceptible d'être produite et celle à fournir au stockeur ainsi qu'à l'ensemble des équipements électriques du réseau de bord.

En particulier, la maîtrise du courant de charge circulant dans le stockeur est une opération particulièrement critique et délicate dans un système électrique embarqué équipé de batteries de technologies Lithium-ion, du fait que ces stockeurs peuvent appeler des courants de charge très importants (supérieurs à 100A).

En effet, ce type de stockeur nécessite, soit de prévoir un surdimensionnement du générateur électrique qui entraîne, notamment, un surcoût significatif, soit de mettre en oeuvre un procédé de contrôle et de limitation adaptatifs de ces forts courants de charge comme celui proposé par l'invention.

Comme illustré par la figure 1, pour assurer le contrôle dynamique du courant de charge du stockeur B de 12V, le procédé de l'invention comprend les opérations suivantes pilotées par un calculateur de bord avec des logiciels appropriés.

Une première opération 1 consiste à estimer de la tension à vide (OCV), dite aussi tension circuit ouvert, du stockeur B. Cette opération est suivie d'une seconde opération 2 de mesure de la réserve de courant de charge disponible (A) pour la recharge du stockeur B en fonction de la capacité de production d'énergie du générateur G. Une troisième opération 3 assure la détermination du courant de charge maximal (Amax) autorisé pour le stockeur B et se poursuit par une quatrième opération 4 visant à déterminer la tension maximale (Vmax) autorisée pour le stockeur B. Chacune de ces opérations va être décrite en détail dans la description qui va suivre.

La première opération 1 est effectuée à partir des mesures de la température (T), du courant (C) et de la tension (V) du stockeur B et permet, en outre, d'estimer la résistance interne (R) du stockeur. Ces mesures sont fournies, de préférence, par un boîtier de surveillance (non représenté) de l'état du stockeur 12V qui intègre éventuellement cette fonctionnalité.

Toutefois, il est possible de prévoir, selon une variante du procédé de l'invention, que ces mesures soient obtenues au moyen d'une cartographie de la résistance interne du stockeur B construite en fonction de sa température (T).

La tension à vide (OCV) du stockeur B répond ainsi à la formule ; (OCV)= (V)-[AxR]. Le cas échéant, un filtrage du signal obtenu peut s'avérer pertinent pour disposer d'une information non bruitée. Un filtrage passe-bas du 1$^{er}$ ordre est alors adapté.

La seconde opération 2 vise à déterminer la réserve de courant de charge, autrement dit la quantité de courant (A) que le générateur G est en capacité de mettre à disposition du stockeur 12V (B), notamment, en vue de sa recharge.

Cette seconde opération est effectuée à partir du rapport cyclique d'ouverture (RCO) ou taux de charge du générateur G et de sa température. La réserve de courant (A) est déterminée en calculant le différentiel entre, d'une part, le rapport cyclique d'ouverture (RCO) du générateur G en temps réel et, d'autre part, son taux de charge limite (RCOm).

A cet effet, on compare le taux de charge actuel (RCO) du générateur G qui est une image de la quantité d'énergie produite et donc consommée à chaque instant par le réseau de bord du véhicule et par le stockeur B, au taux de charge limite (RCOm), fixé comme paramètre statique ou dynamique. Ce taux de charge limite peut être fixé, par exemple, à 90 %.

L'écart entre ces deux valeurs du taux de charge du générateur G est ensuite utilisé pour déterminer la réserve de courant disponible (A) en capacité de production, au niveau du générateur G utilisé, en fonction de sa température (Tg), grâce à une cartographie de sa capacité de production.

La réserve de courant disponible (A) est alors donnée par la fonction f selon la formule ; (A) = f(T, RCO-RCOm) où f est la fonction de cartographie du courant de réserve pouvant être produit par le générateur G du système de fourniture d'énergie électrique du véhicule, tout en respectant l'équilibre du bilan : énergie produite/énergie consommée.

La troisième opération 3 a pour but de déterminer le courant de charge maximal (Amax), ou optimal, utilisable pour recharger le stockeur B. Cette opération permet d'assurer la recharge du stockeur tout en maîtrisant le courant associé ce qui est nécessaire sur des systèmes utilisant un stockeur Lithium-ion 12V ayant tendance à accepter des forts courants de charge.

En effet, en l'absence de contrôle, ces courants de charge peuvent nuire à l'équilibre entre la production électrique, l'alimentation du réseau de bord du véhicule et la recharge du stockeur B, par exemple, en saturant le stockeur.

Cette troisième opération 3 est effectuée à partir de l'état de charge (SOC) du stockeur, du courant (C) du stockeur, de la température (T) du stockeur et de la réserve de courant disponible (A) obtenue lors de la seconde opération 2.

Dans ce but, on détermine au préalable le courant limite (Cm) pouvant circuler dans le stockeur B en fonction de sa température (T) et de son état de charge (SOC) puis on compare la somme du courant (C) et de la réserve de courant disponible (A) avec ce courant limite (Cm). Ce courant limite peut être déterminé en utilisant une cartographie fonction de l'état de charge et de la température en utilisant les spécifications caractéristiques du stockeur 12V communiquées par son fabricant ou son fournisseur.

Le courant maximal autorisé (Amax) pour le stockeur B est alors déterminé de la façon suivante ;

- si

$$(C)+(A) \text{ est inférieur ou égal à } (Cm) \text{ alors } (Amax) = (C)+(A)$$

et,

- si

$$(C)+(A) \text{ est supérieur à } (Cm) \text{ alors } (Amax) = (Cm).$$

Dans une finalité d'effectuer une régulation dynamique du courant pouvant être prélevé par le stockeur B (et, en particulier, lorsque l'on utilise une batterie Lithium-ion), la quatrième opération 4 a pour objectif de déterminer la tension maximale (Vmax) de consigne pouvant être appliquée aux bornes du stockeur B sans risque de dépasser un courant maximal de charge qui prend en compte les capacités de production du ou des générateurs électriques du véhicule. Cette opération permet ainsi d'adapter en permanence le courant prélevé par le stockeur B en fonction de la quantité d'énergie pouvant être produite par le générateur électrique G.

Cette quatrième opération 4 est ainsi effectuée à partir de la tension à vide (OCV) du stockeur, de sa résistance interne (R) estimée et du courant maximal (Amax) autorisé en appliquant la formule (Vmax) = (OCV)+[(R)×(Amax)].

**Revendications**

1. Procédé de contrôle dynamique du courant d'un stockeur (B) d'énergie électrique basse tension de véhicule automobile équipé d'au moins un générateur (G) d'énergie électrique pour fournir l'énergie de charge de ce stockeur (B), ce contrôle dynamique étant basé sur la tension maximale autorisée et comprenant une première opération (1) d'estimation de la tension à vide (OCV) et de la résistance (R) du stockeur (B) effectuée à partir des mesures de la température (T), du courant (C) et de la tension (V) du stockeur (B), **caractérisé en ce qu'**il comprend une seconde opération (2) de mesure de la réserve de courant de charge disponible (A) pour la recharge du stockeur (B), c'est-à-dire la quantité de courant (A) que le générateur (G) est en capacité de mettre à disposition du stockeur, en fonction de la capacité de production d'énergie du générateur (G), une troisième opération (3) de détermination du courant de charge maximal (Amax) autorisé pour ledit stockeur à partir de l'état de charge (SOC) du stockeur (B), du courant (C), de la température (T) du stockeur et de la réserve de courant disponible (A) et une quatrième opération (4) de détermination de la tension maximale (Vmax) autorisée pour ledit stockeur à partir de la tension à vide (OCV) du stockeur (B), de sa résistance (R) estimée et du courant maximal (Amax) autorisé.

2. Procédé selon la revendication 1, **caractérisé en ce que** lesdites mesures sont fournies par un boîtier de surveillance de l'état du stockeur.

3. Procédé selon la revendication 1 ou la revendication 2, **caractérisé en ce que** lesdites mesures sont obtenues au moyen d'une cartographie de la résistance interne du stockeur (B) construite en fonction de sa température (T).

4. Procédé selon l'une des revendications précédentes, **caractérisé en ce que** la seconde opération (2) est effectuée à partir du rapport cyclique d'ouverture (RCO) du générateur (G) et de sa température.

5. Procédé selon la revendication précédente, **caractérisé en ce que** la réserve de courant (A) est déterminée en calculant le différentiel entre, d'une part, le rapport cyclique d'ouverture (RCO) du générateur (G) en temps réel et, d'autre part, son taux de charge limite (RCOm).

6. Procédé selon l'une des revendications précédentes, **caractérisé en ce qu'**on détermine au préalable le courant limite (Cm) du stockeur (B) en fonction de sa température (T) et de son état de charge (SOC) puis on compare la somme du courant (C) et de la réserve de courant disponible (A) avec ce courant limite (Cm) de telle sorte que si (C)+(A) est inférieur ou égal à (Cm) alors (A max) = (C)+(A) et, si (C)+(A) est supérieur à (Cm) alors (A max) = (Cm).

7. Procédé selon l'une des revendications précédentes, **caractérisé en ce que** la quatrième opération (4) est effectuée à partir de la tension à vide (OCV) du stockeur (B), de sa résistance (R) estimée et du courant maximal (Amax) autorisé en appliquant la formule (Vmax) = (OCV)+(R)x(Amax).

8. Véhicule automobile équipé d'un calculateur embarqué et de logiciels aptes et destiné à la mise en oeuvre du procédé de contrôle dynamique du courant d'un stockeur (B) selon l'une des revendications précédentes.

**Patentansprüche**

1. Verfahren zur dynamischen Steuerung des Stroms eines Niedervolt-Elektroenergiespeichers (B) eines Kraftfahrzeugs, der mit mindestens einem elektrischen Energiegenerator (G) zur Bereitstellung der Ladeenergie dieses Speichers (B) ausgestattet ist, wobei diese dynamische Steuerung erfolgt basiert auf der maximal zulässigen Spannung und umfasst einen ersten Schritt (1) der Schätzung der Leerlaufspannung (OCV) und des Widerstands (R) des Speichers (B), der anhand von Messungen der Temperatur (T), des Stroms (C) und Spannung (V) des Speichers (B), **dadurch gekennzeichnet, dass** es einen zweiten Vorgang (2) zur Messung der verfügbaren Ladestromreserve (A) für die Wiederaufladung des Speichers (B) umfasst, d Strommenge (A), die der Generator (G) in Abhängigkeit von der Energieerzeugungskapazität des Generators (G) dem Speicher zur Verfügung stellen kann, ein dritter Vorgang (3) zur Bestimmung des maximalen Ladestroms (Amax) zulässig für diesen Speicher aus dem Ladezustand (SOC) des Speichers (B), dem Strom (C), der Temperatur (T) des Speichers und der verfügbaren Stromreserve (A) und einem vierten Schritt (4) der Bestimmung die für den Speicher zulässige Höchstspannung (Vmax) aus der Leerlaufspannung (OCV) des Speichers (B), seinem geschätzten Widerstand (R) und dem zulässigen Höchststrom (Amax).

2. Verfahren nach Anspruch 1, **dadurch gekennzeichnet, dass** die Messungen von einer Box zur Überwachung des Zustands des Speichers bereitgestellt werden.

3. Verfahren nach Anspruch 1 oder Anspruch 2, **dadurch gekennzeichnet, dass** die Messungen mittels einer Karte des Innenwiderstands des Speichers (B) erhalten werden, die als Funktion seiner Temperatur (T) erstellt wird.

4. Verfahren nach einem der vorhergehenden Ansprüche, **dadurch gekennzeichnet, dass** der zweite Betrieb (2) aus dem Öffnungs-Tastverhältnis (RCO) des Generators (G) und seiner Temperatur durchgeführt wird.

5. Verfahren nach dem vorhergehenden Anspruch, **dadurch gekennzeichnet, dass** die Stromreserve (A) durch Berechnung der Differenz zwischen einerseits dem Öffnungstastverhältnis (RCO) des Generators (G) in Echtzeit und andererseits ermittelt wird andererseits der Grenzladesatz (RCOM).

6. Verfahren nach einem der vorhergehenden Ansprüche, **dadurch gekennzeichnet, dass** zunächst der Grenzstrom (Cm) des Speichers (B) in Abhängigkeit von seiner Temperatur (T) und seinem Ladezustand (SOC) ermittelt und anschließend verglichen wird Summe des Stroms (C) und der verfügbaren Stromreserve (A) mit diesem Grenzstrom (Cm), so dass, wenn (C)+(A) kleiner oder gleich (Cm) ist, (A max) = (C) +(A) und wenn (C)+(A) größer als (Cm) ist, dann ist (A max) = (Cm).

7. Verfahren nach einem der vorhergehenden Ansprüche, **dadurch gekennzeichnet, dass** die vierte Operation (4) aus der Leerlaufspannung (OCV) des Speichers (B), seinem geschätzten Widerstand (R) und dem maximalen Strom (Amax) autorisiert durch Anwendung der Formel (Vmax) = (OCV)+(R)x(Amax).

8. Kraftfahrzeug, ausgestattet mit einem Bordcomputer und einer Software, die zur Durchführung des Verfahrens zur dynamischen Steuerung des Stroms eines Speichers (B) nach einem der vorhergehenden Ansprüche geeignet und bestimmt ist.

**Claims**

1. Method for dynamic control of the current of a low-voltage electrical energy store (B) of a motor vehicle equipped with at least one electrical energy generator (G) to supply the charging energy of this store (B), this dynamic control being based on the maximum authorized voltage and comprising a first operation (1) of estimating the no-load voltage (OCV) and the resistance (R) of the storer (B) carried out from measurements of the temperature (T), current (C) and voltage (V) of the store (B), **characterized in that** it comprises a second operation (2) for measuring the available charge current reserve (A) for the recharge of the storer (B), that is to say the quantity of current (A) that the generator (G) is able to make available to the storer, depending on the energy production capacity of the generator (G), a third operation (3) for determining the maximum charging current (Amax) authorized for said store from the state of charge (SOC) of the store (B), the current (C), the temperature (T) of the storer and the available current reserve (A) and a fourth operation (4) of determining the maximum voltage (Vmax) authorized for said storer from the no-load voltage (OCV) of the storer (B), its estimated resistance (R) and the maximum current (Amax) authorized.

2. Method according to claim 1, **characterized in that** said measurements are provided by a box for monitoring the state of the storer.

3. Method according to claim 1 or claim 2, **characterized in that** said measurements are obtained by means of a map of the internal resistance of the storer (B) constructed as a function of its temperature (T).

4. Method according to one of the preceding claims, **characterized in that** the second operation (2) is carried out from the opening duty cycle (RCO) of the generator (G) and its temperature.

5. Method according to the preceding claim, **characterized in that** the current reserve (A) is determined by calculating the differential between, on the one hand, the opening duty cycle (RCO) of the generator (G) in real time and, on the other hand, its limiting charge rate (RCOm).

6. Method according to one of the preceding claims, **characterized in that** the limiting current (Cm) of the storer (B) is first determined as a function of its temperature (T) and its state of charge (SOC) then we compares the sum of the current (C) and the available current reserve (A) with this limit current (Cm) such that if (C)+(A) is less than or equal to (Cm) then (A max) = (C)+(A) and, if (C)+(A) is greater than (Cm) then (A max) = (Cm).

7. Method according to one of the preceding claims, **characterized in that** the fourth operation (4) is carried out from the no-load voltage (OCV) of the storer (B), its estimated resistance (R) and the maximum current (Amax) authorized by applying the formula $(Vmax) = (OCV)+(R)x(Amax)$.

8. Motor vehicle equipped with an on-board computer and software suitable for and intended for the implementation of the process for dynamic control of the current of a store (B) according to one of the preceding claims.

[Fig. 1]

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 10442373 B
- US 2018134168 A1
- US 2016193940 A1